# EUROPEAN PATENT SPECIFICATION

(11) **EP 2 229 988 B1**
(45) Date of publication and mention of the grant of the patent: **20.11.2013**
(21) Application number: 09003570.0
(22) Date of filing: 11.03.2009
(51) Int. Cl.: C02F 103/08, B01D 1/00, B01D 1/14, B01D 1/16, B01D 1/26, B01D 1/28, B01D 3/00, B01D 3/06

(54) **A device and a method for liquid purification and power generation**
Vorrichtung und Verfahren zur Flüssigkeitsreinigung und Stromerzeugung
Dispositif et procédé de purification de liquide et génération électrique

(43) Date of publication of application: 22.09.2010
(73) Proprietor: King Abdulaziz City for Science and Technology, Riyadh 11442 (SA)
(72) Inventor: BAABBAD, Dr. Mazen Abdullah, Riyadh 11442 (SA); AL-ANSARY, Dr. Hany Abdulrahman, Riyadh 11323 (SA)
(74) Representative: Hartig, Michael

(56) References cited:
- EP-A- 0 269 218
- DE-A1-102006 010 894
- GB-A- 1 262 458
- JP-A- 56 047 608
- US-A- 3 151 677
- US-A- 3 248 305
- US-A- 4 211 613
- US-A1- 2003 132 097
- US-A1- 2005 183 440

## Description

The present invention relates to a multi-generation device and method for liquid purification and power generation, in particular to purification of saline water such as high salinity sea water.

High volume purification of contaminated liquids, such as waste water or saline water, is a major technical and economical challenge, in particular with regard to the current shortage of fresh water supplies for consumption or agriculture. Several conventional methods have been proposed for providing purified liquids, such as mechanical methods or thermal methods.

Mechanical methods, such as reverse osmosis, require the use of membranes or filters to separate a liquid from its contaminants. The contaminants are concentrated in a drain liquid that has to be further treated or that is rejected to the environment.

In thermal methods, such as multi-stage flash evaporation, multi-effect distillation and mechanical vapour compression, the contaminated liquid is heated and re-condensed while its contaminants are separated during the phase transitions of the liquid.

Even though thermal methods typically produce the highest purity they also require large amounts of energy. In particular, such systems require mechanical energy, which is generally more expensive than thermal energy, to pump the contaminated liquid into the system or to maintain certain pressure gradients within the system. In addition, these systems have a complex configuration and, thus, have very high initial costs of construction and initial operation. Therefore, the use is mostly limited to large scale municipal installations.

As in mechanical methods, these systems produce a large amount of drain liquid comprising the concentrated contaminants, such as high salinity water, that is often rejected to the environment and, therefore, can be critical with regard to environmental pollution. US 3248305 discloses a sea water purification device comprising a vessel with a heater to evaporate sea water and means for condensing said vapour. A similar approach is described in US 2003/132097, wherein a desalination device includes a saltwater input line and a desalinator having a water input connected to the input line, a fresh water output and a brine output. Waste heat from a fuel cell is used to heat the desilinator. A cascaded evaporation system is described in US 2005/183440. This system includes a plurality of vessels in series, comprising a first set of vapour-compression evaporators and a second set of multi-effect evaporators. Another apparatus for distilling liquids is described in GB 1262458, wherein oil is used to heat sea water in order to generate potable water.

Furthermore, EP 0269218 discloses a method for recovery of isocyanates and describes the vaporisation of a mixture containing said isocyanates by contacting said mixture with a bath of molten metal or molten salt.

JP 5647608 discusses the use of solar energy for generating electric power and discloses an apparatus using an operating fluid to drive a hydraulic turbine and a fluid steam turbine.

Accordingly, it is an object of the present invention to provide a liquid purification device and system as well as a method for liquid purification that have manageable initial costs, enable an energy efficient operation, and that are safe for the environment.

The above object is achieved by the device according to claim 1, the method according to claim 8 and the system according to claim 15. Preferred embodiments are covered by the dependent claims.

A liquid purification device according to the present invention comprises a vessel, to accommodate a first liquid, means for directly mixing a second liquid to be purified with the first liquid, a heater arranged within the vessel, to heat the first and the second liquid, thereby causing the second liquid to evaporate, and a condenser, to condense the vapour, thereby generating a purified liquid.

The second liquid can be different from the first liquid. Preferably, it comprises waste water, saline water, or high salinity sea water that is directly mixed with the first liquid. Preferably said means for mixing comprises means for injecting, dispersing or spraying of the second liquid directly into the first liquid. The means for mixing can comprise at least one inlet, including a check valve or nozzle, or arrangements thereof. Both, the first and the second liquid can be heated, preferably gradually heated, by the heater which causes the second liquid to flow upwards in the vessel and to evaporate to vapour. Thus, the first liquid facilitates the thermal exchange between the heater and the second liquid. During warming and evaporation of the second liquid to vapour the second liquid is cleaned from its contaminants and provided as a purified liquid.

The present invention is an efficient approach to liquid purification that has low initial costs due to its simple configuration and operation and that is safe for the environment. The advantageous direct mixing of the second liquid with the first liquid and the gradual heat exchange between the first and the second liquid enable a highly efficient heat transfer.

In a preferred embodiment of the purification device said means for mixing comprises a spraying unit having a plurality of nozzles disposed in the vessel, to spray the second liquid into the first liquid.

In one embodiment of the invention, the nozzles of the spraying unit are arranged in the bottom of the vessel or in the sidewall of the vessel or in both. The nozzles can be arranged in such a way to spray the second liquid uniformly into the first liquid in a lower part of the vessel or to spray the second liquid to a selected region within the vessel, e.g., to the environment of the heater. In either case the nozzles are arranged to facilitate the heating and evaporation of the second liquid.

In another embodiment of the invention the nozzles of the spraying unit are adjusted and have a diameter to generate a stream of liquid droplets. The spraying nozzles may therefore equally disperse and mix the second liquid with the first liquid. Preferably, the nozzles have a diameter of less than 1.0 mm and most preferably less than 0.6 mm. Preferably, for use with high salinity sea water the nozzle diameter is substantially at 0.5 mm. After being dispersed in the first liquid, the liquid droplets rise to the top of the vessel and are heated by the heater until they evaporate, thereby being cleaned from their contaminants.

A liquid purification device according to one embodiment of the present invention may further comprise a pump, to pump the second liquid to said means for mixing, and a tank, to collect the purified liquid. The pump delivers the second liquid under pressure to said means for mixing at a pressure of between 1.5 and 15.0 bar, preferably at a pressure of substantially 2 bar. The purified liquid is collected in the tank.

A liquid purification device according to another embodiment of the present invention may further comprise a cleaning section at an upper part of the vessel, configured to clean the vapour from contaminants, and a port arranged at a lower part of the vessel, to precipitate said contaminants from the vessel. Potentially remaining contaminants in the vapour of the second liquid are cleaned in the cleaning section at the upper part of the vessel and, thus, remain in the vessel. All contaminants, comprising solids, are precipitated at the bottom of the vessel, blown out of the vessel through the port and separated from the first liquid by precipitation or centrifugation and thermal or chemical treatment. During this processing, the remaining first liquid is extracted and separated from said contaminants. The solid contaminants, e.g. solid salts, are thereafter collected and the remaining first liquid is recycled back to the vessel. The useful processing of the contaminants helps to prevent environmental pollution and thus makes the inventive device safe for the environment.

In a preferred embodiment of the purification device the cleaning section comprises at least one louvre. The louvres may be arranged in a pattern to force the vapour to follow a path, preferably a zigzag-path, thereby retarding and trapping the remaining contaminant of the vapour at the louvres. The trapped contaminants fall back to the vessel to be precipitated at the bottom of the vessel.

In a liquid purification device according to another embodiment of the invention the vessel is at least partially filled with said first liquid, wherein said first liquid has a density higher than said second liquid, comprising an ionic liquid. The density difference between the two liquids facilitates the precipitation of the contaminants and allows the sprayed second liquid, i.e., the liquid droplets, to rise within the first liquid. It further optimizes the heat transfer from the heater and the first liquid to the second liquid. The first liquid can comprise a liquid having a density higher than water, comprising glycerine, and ethylene glycol. Most preferably, the first liquid comprises an ionic liquid that contains essentially ions only, preferably ionic salts that are in liquid state at room temperature, comprising N-butyl-N-methyl-pyrrolidinium-bis(trifluoromethanesulfonyl)-imide, and 1-butyl-3-methyl-imidazolium-tetrafluoroborate. Preferably, the first liquid exhibits excellent thermal properties, like thermal stability, a wide liquid range, miscibility and non-combustibility.

In a particularly preferred embodiment of the invention, the purification device further comprises a hydraulic turbine, arranged to be driven by the purified liquid to generate power. The hydraulic turbine is either attached to the condenser or the tank and receives either the purified liquid after condensation or the purified liquid collected in the tank under pressure. This pressure drives the hydraulic turbine. Preferably, the pump delivers the second liquid at a pressure of substantially 12 bar. The resulting energy of the hydraulic turbine is used to reduce the mechanical energy needed by the device, e.g. for driving the pump for pumping the second liquid, or is used otherwise. Preferably the hydraulic turbine is a water turbine.

Moreover, the liquid purification device according to one embodiment of the present invention further comprises a steam turbine, arranged at a vapour outlet of the vessel, to receive the vapour and to generate power. The pressure of the vapour substantially matches the pressure generated by the pump. Preferably, the pump delivers the second liquid at a pressure of substantially 12 bar. Likewise, the resulting energy of the steam turbine is used to reduce the mechanical energy needed by the device.

In a preferred embodiment of the present invention, the device further comprises at least one photovoltaic unit located at or inside the vessel such that heat generated by said photovoltaic unit can be utilized for heating the vessel and/or the first and second liquid. In this preferred embodiment the second liquid is mixed with the first liquid such that the mixed second liquid is guided past the neighbourhood of the backside of the photovoltaic units to cool them and to protect them from accumulating waste heat. The photovoltaic units preferably comprise a plurality of solar cells and/or photovoltaic arrays, that receive concentrated solar radiation. The power generated by the photovoltaic unit may also be used to reduce the mechanical power requirements of the device or for other purposes.

In one embodiment of the present invention the liquid purification device further comprises a vacuum pump disposed between the vessel and the condenser, generating a pressure in the vessel that is lower than the pressure in the condenser such that the vapour condenses at a temperature higher than the temperature within said vessel. The vacuum pump generates a pressure gradient between the vessel and the condenser and allows for evaporation of the second liquid at a temperature that is low enough to cool the photovoltaic unit of the device. Preferably, the pressure gradient is adjusted such that the second liquid evaporates at a temperature lower than 90° C or at a temperature lower than the maximal working temperature of the photovoltaic units. In addition, the pressure gradient generated by the vacuum pump also enables a condensation of the vapour in the condenser at a temperature higher than the temperature needed for evaporating the second liquid in the vessel. This thermal energy is provided to the heater of the same or another liquid purification device.

In a preferred embodiment of the invention the heater is coupled to the condenser to utilize heat generated by the condenser. Due to the pressure gradient generated by the vacuum pump, in this embodiment, the condensation temperature of the vapour is higher than the evaporation temperature of the second liquid. This temperature gradient is used to drive the heater of the same device, either by directly coupling the heater to the condenser and directly allowing the thermal energy of the condenser to heat the first and the second liquid in the vessel or by using a heat exchanger to transfer the thermal energy to the liquids in the vessel.

The liquid purification method according to the present invention comprises the steps of providing a vessel accommodating a first liquid, directly mixing a second liquid to be purified with the first liquid, heating the first and the second liquid, thereby causing the second liquid to evaporate, and condensing the vapour, thereby generating a purified liquid.

In a preferred embodiment of the method said mixing comprises spraying of the second liquid into the first liquid.

In a preferred embodiment of the invention said spraying of the second liquid generates a stream of liquid droplets. The stream of liquid droplets is dispersed in the first liquid and simplifies the heating of the second liquid.

The liquid purification method according to another embodiment of the invention further comprises the steps of pumping the second liquid to be mixed, and collecting the purified liquid.

Moreover, the liquid purification method according to another embodiment of the present invention further comprises the steps of cleaning the vapour from contaminants, and precipitating the contaminants from said vessel. Potentially remaining contaminants in the vapour of the second liquid are cleaned and, thus, remain in the vessel and are finally precipitated from said vessel.

In another embodiment of the invention said cleaning comprises guiding the vapour past at least one louvre. The vapour is guided along a path, preferably a zigzag-path, such that the remaining contaminants are retarded and trapped at the louvre and finally fall back to the bottom of the vessel or are removed otherwise.

In a liquid purification method according to a preferred embodiment of the invention the vessel provided is at least partially filled with said first liquid, said first liquid having a density higher than said second liquid, comprising an ionic liquid.

In a preferred embodiment of the present invention the method further comprises generating power by driving a hydraulic turbine by the purified liquid.

In another embodiment of the present invention the method further comprises generating power by using the pressure of the vapour in a steam turbine. The energy generated by the hydraulic turbine and/or the steam turbine is used to reduce the mechanical energy required by the method.

In a liquid purification method according to another embodiment of the invention the vessel and/or the first and the second liquid are heated by heat generated by at least one photovoltaic unit located at or in said vessel. Preferably the second liquid is mixed with the first liquid such that the mixed second liquid is guided past the neighbourhood of the backside of the photovoltaic units to cool them and to protect them from accumulating waste heat. In addition, the power generated by the photovoltaic units may also be used to reduce the mechanical power required by the method or for other purposes.

In one embodiment of the present invention the liquid purification method further comprises generating a pressure in the vessel that is lower than the pressure in a condenser utilized for condensing said vapour such that the vapour condenses at a temperature higher than the temperature within said vessel.

Moreover, in the liquid purification method according to another embodiment of the present invention the first and the second liquid are heated by heat generated by condensing said vapour.

The liquid purification system according to the present invention comprises a cascade of devices of the present invention, comprising a first and at least one consecutive device, wherein the heater of the first device is driven by an external heat source, and wherein the heater of each consecutive device is coupled to the condenser of the preceding device. Preferably the system comprises a first and a second device, thereby forming a three stage liquid purification system. In a three stage system the heater has preferably a temperature higher than 135° C and the temperature of the vessel of the second device is higher than 130° C. A further preferred embodiment of the liquid purification system comprises three devices forming a four stage liquid purification system.

According to another preferred embodiment of the system the condenser of the last device is air cooled or coupled to the heater of the last device.

Further details and characteristics of the invention will be set forward below in an exemplifying embodiment of the invention in conjunction with the drawings, where:
- Fig. 1: shows an embodiment of a three stage liquid purification system comprising liquid purification devices according to one embodiment of the present invention;
- Fig. 2: shows a four stage liquid purification system according to another embodiment of the present invention;
- Fig. 3: shows the three stage liquid purification system of Fig. 1 that utilizes a steam turbine to generate power; and
- Fig. 4: shows a liquid purification device according to another embodiment of the present invention that integrates solar power generation and liquid purification.

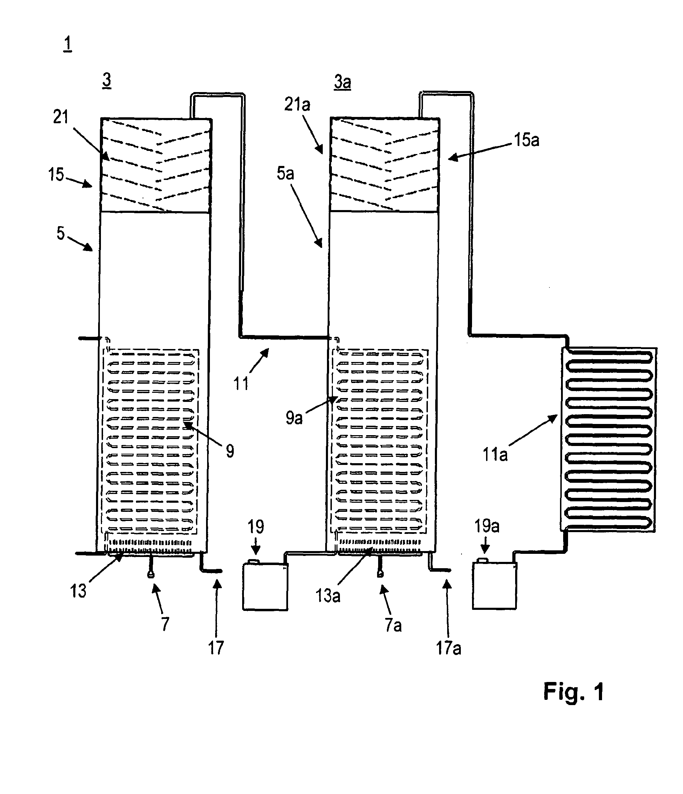

An embodiment of the liquid purification system 1 comprising two liquid purification devices 3, 3a forming a three stage liquid purification system is shown in Fig. 1. The liquid purification device 3, 3a has a vessel 5, 5a, a spraying unit 7, 7a, a heater 9, 9a, and a condenser 11, 11a.

The vessel 5, 5a has the form of a cylindrical or rectangular container or a tank of an arbitrary cross section and profile. Furthermore, the walls of the vessel 5, 5a can be made of a pressure and heat resistant material such as metal, metal alloy or any other suitable material. The vessel 5, 5a is at least partially filled with a first liquid that may completely or partially cover the heater 9, 9a in the vessel 5, 5a. The first liquid has a density higher that the density of a second liquid, that has to be purified. The first liquid can comprise an ionic liquid, preferably a non-combustible ionic liquid, with optimal thermal properties, such as ionic salts that are in liquid state at room temperature, comprising N-butyl-N-methyl-pyrrolidinium-bis(trifluoromethanesulfonyl)-imide, and 1-butyl-3-methyl-imidazolium-tetrafluoroborate.

The heater 9 has the form of a meandering heater tube guiding a heat transfer liquid medium, such as oil. The heater 9 may also comprise a plurality of parallel tubes or hollow bars carrying the heat transfer medium or may be assembled as a conventional heat exchanger.

The spraying unit 7, 7a comprises a plurality of nozzles 13, 13a arranged at the bottom and within the vessel 5, 5a. The nozzles 13, 13a spray the second liquid directly into the first liquid. Typically, the nozzles 13, 13a are spraying nozzles with a diameter of between 0.1 to 1.0 mm, preferably with a diameter of substantially 0.5 mm, that generate a stream of liquid droplets. The device 3, 3a further comprises a pump (not shown) that pumps the second liquid to the spraying unit 7, 7a at a pressure of between 1.5 and 15.0 bar, preferably at a pressure of substantially 2 bar.

Moreover, the device 3, 3a comprises a cleaning section 15, 15a, a port 17, 17a to precipitate contaminants separated from the second liquid, and a tank 19, 19a to collect the purified liquid. The cleaning section 15, 15a comprises a plurality of louvres 21, 21 a at the upper part of the vessel 5, 5a. The louvres 21, 21a can be arranged as multiple parallel louvres on opposing sides of the vessel 5, 5a or as multiple shifted and tilted louvres forming a pattern, e.g., a herringbone pattern or any suitable pattern, to guide the vapour along a path, preferably a zigzag-path, thereby retarding and trapping the remaining contaminants at the louvres 21, 21a and thus cleaning the vapour from said contaminants.

In the system shown in Fig. 1, the second liquid comprising contaminants is pumped to the spraying unit 7, where it is distributed to the nozzles 13 and directly sprayed into the first liquid. The density difference between the first and the second liquid allows the sprayed second liquid, i.e., the liquid droplets, to rise within the first liquid. As the uniformly distributed liquid droplets rise towards the top of the vessel they pass the heater 9 and are gradually heated until they evaporate while being separated from the contaminants. The vapour enters the cleaning section 15 and is forced to follow a zigzag-path through the louvres 21 where it is cleaned from possibly remaining contaminants. The remaining contaminants are retarded and trapped at the louvres 21 and finally drop back to the vessel 5. The cleaned vapour leaves the vessel 5 through an outlet and enters the condenser 11, where it condenses to a purified liquid under pressure. Typically, the pressure during condensation ranges between 1.5 and 15.0 bar. The condenser 11 is connected to the heater 9a of the second device 3a. The thermal energy generated during condensation of the vapour is thus transferred via the heater 9a to the vessel 5a and the liquids contained in the second device 3a. The purified liquid is collected in the tank 19 under pressure.

During this cycle the second liquid is totally evaporated in the vessel 5 and contaminants are precipitated at the bottom of the vessel 5, where they are blown out through the port 17. Because the contaminants are removed as solids, they can be sold or disposed of with little environmental impact.

The second device 3a exposes the same functionality as the first device 3. However, it does not need an external heat source but uses the thermal energy released by the condenser 11 of the first device 3, as outlined above. Even though the condenser 11a of the second unit 3a is shown to be air cooled it is likewise possible to use its thermal energy, e.g. for pre-heating the second liquid before it is pumped to and sprayed into the vessels 5, 5a.

As mentioned before, the purified liquid is collected in the tanks 19, 19a under pressure. This pressure can be used to run a hydraulic turbine (not shown), e.g., a water turbine, to generate power. This power is used to reduce the mechanical energy required, for instance to support the energy requirements of the pumps for pumping the second liquid to the spraying units 7, 7a. In this embodiment the pressure ranges between 10.0 and 15.0 bar, preferably the pressure is substantially at 12 bar.

The system 1 requires the temperature of the heater 9 of the first vessel 5 to be higher than 135° C. Furthermore, the temperature of the vessel 5a of the second device 3a must be higher than 130° C.

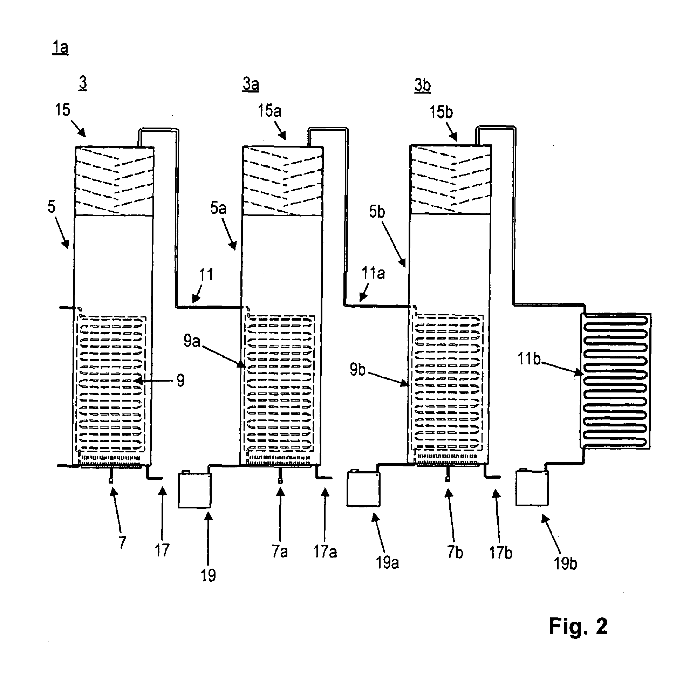

Figure 2 shows another embodiment of a liquid purification system 1a according to the present invention that is similar to the system shown in Fig. 1. System 1a comprises a third device 3b and thereby forms a four stage liquid purification system. Accordingly, the condenser 11 of the first device 3 is coupled to the heater 9a of the intermediate second device 3a, and the condenser 11a of the second device 3a is coupled to the heater 9b of the last third device 3b. The condenser 11b of the third device 3b is air cooled.

The temperature of the heater 9 in system 1a is preferably higher than 140° C, such that the subsequent units are operated at a temperature higher than 135° C for the vessel 5a of the second device 3a, and at a temperature higher than 130° C for the vessel 5b of the third device 3b.

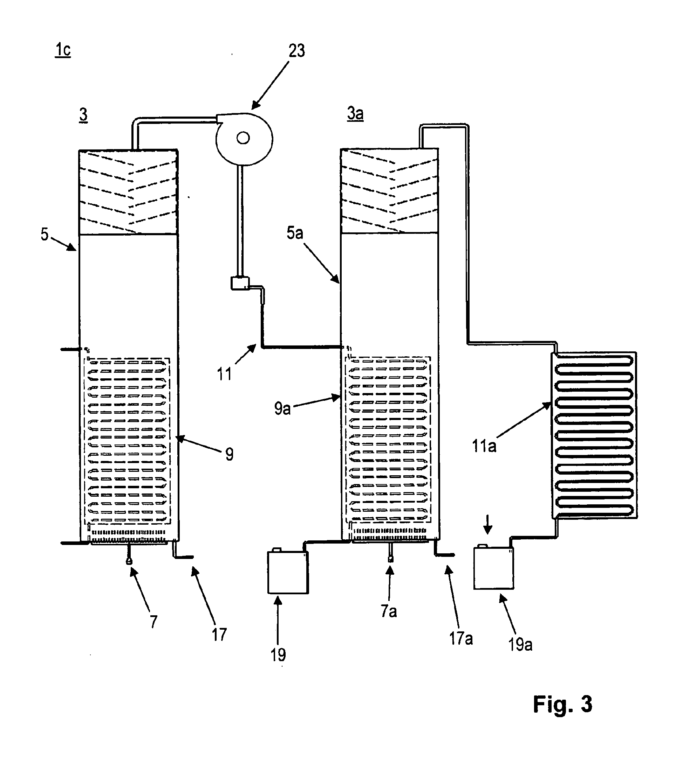

Figure 3 shows another embodiment of a three stage liquid purification system according to the present invention. The system 1c comprises two devices 3, 3a that are similar to the devices shown in Fig. 1. In addition, device 3 comprises a steam turbine 23 that is coupled to the outlet of the vessel 5 and configured to receive the vapour from the vessel 5 to generate power. The pressure of the vapour within the vessel 5 substantially matches the pressure generated by the pump. In this embodiment the pressure within the vessel 5 ranges between 10.0 and 15.0 bar, preferably the pressure is substantially at 12 bar. The generated power is used to reduce the mechanical energy required by the system 1c, e.g., for pumping the second liquid into the vessels 5, 5a. The exhaust of the steam turbine 23 is passed to the condenser 11 and further used to heat the vessel 5a. In this embodiment the heater 9 has a temperature of at least 160° C.

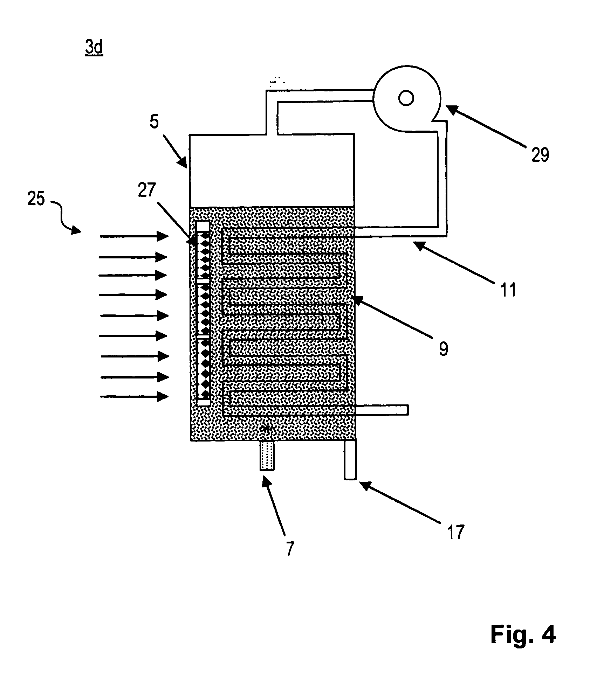

Figure 4 shows a preferred embodiment of the liquid purification device 3d according to the present invention. The device 3d comprises a vessel 5, a spraying unit 7, a heater 9, and a condenser 11, that is directly coupled to the heater 9. Furthermore, the device 3d comprises at least one photovoltaic unit 25.

The photovoltaic unit 25 is arranged in a sidewall of the vessel 5 and comprises photovoltaic cells 27 that receive concentrated solar radiation through a glass window from a solar collector. It is to be understood, that each photovoltaic unit 25 may be arranged at various locations at the sidewall of the vessel 5. Preferably, the photovoltaic cells 27 are crystalline silicon solar cells.

The device 3d further comprises a vacuum pump 29 that generates a pressure gradient between the inside of the vessel 5 and the condenser 11. The lower pressure within the vessel 5 allows for an evaporation of the second liquid at a temperature that is lower than the temperature needed for condensation of the vapour in the condenser 11 that is subject to a higher pressure.

In device 3d the second liquid to be purified is, likewise, pumped and sprayed into the vessel 5 by the spraying unit 7. The vessel 5 is at least partially filled with a first liquid, preferably ionic liquid, that has a density higher than the second liquid. The second liquid is uniformly sprayed into the first liquid and the stream of liquid droplets is directed to the neighbourhood of the backside of the photovoltaic cells 27 that are part of the photovoltaic unit 25. Hence, the second liquid is heated by the waste heat generated by the photovoltaic unit 25 and the photovoltaic cells 27 of the photovoltaic unit 25 are cooled. This thermal exchange protects the photovoltaic unit 25 from accumulating waste heat from the concentrated solar rays and ensures that the photovoltaic unit 25 works as efficient as possible. The lower pressure in the vessel 5 generated by the vacuum pump 29 allows for an evaporation of the second liquid at a temperature that is below the maximal working temperature of the photovoltaic cells 27, preferably below 90° C.

Beside using the waste heat of the photovoltaic unit 25 for heating the liquids in the vessel 5, the electrical power produced may also be used to reduce the mechanical power requirements of the system, e.g., for driving the pump for pumping the second liquid to the spraying unit 7 or for driving the vacuum pump 29.

The vapour leaves the vessel 5 and due to the pressure gradient generated by the vacuum pump 29 condenses in the condenser 11 at a temperature that is slightly higher than the temperature within the vessel 5, such that it transfers the heat back to the vessel via the heater 9. The purified liquid leaves the condenser 11 after being passed through the heater 9.

## Claims

1. A liquid purification device, comprising:
a vessel (5) accommodating a first liquid, the vessel (5) being at least partially filled with said first liquid;
means for directly mixing a second liquid to be purified with the first liquid, said first liquid having a density higher than said second liquid, wherein said means for mixing comprises a spraying unit (7) having a plurality of nozzles (13) disposed in the vessel (5), to spray the second liquid into the first liquid;
a heater (9) arranged within the vessel (5), to heat the first and the second liquid,
thereby causing the sprayed second liquid to flow upwards in the vessel and to evaporate to vapour; and
a condenser (11), to condense the vapour, thereby generating a purified liquid,
wherein said first liquid comprises an ionic liquid, including ionic salts that are in liquid state at room temperature.

2. The liquid purification device according to claim 1, wherein the ionic liquid comprises at least one of N-butyl-N-methyl-pyrrolidinium-bis(trifluoromethanesulfonyl)-imide, and 1-butyl-3-methyl-imidazolium-tetrafluoroborate.

3. The device according to claim 1 or 2, wherein the nozzles (13) of the spraying unit (7) are arranged in the bottom of the vessel (5) or in the side wall of the vessel (5) or in both, and wherein the nozzles (13) of the spraying unit (7) are adjusted and have a diameter to generate a stream of liquid droplets.

4. The device according to one of the preceding claims, further comprising:
a pump, to pump the second liquid to said means for mixing;
a cleaning section (15) at an upper part of the vessel (5) comprising at least one louvre (21), configured to clean the vapour from contaminants;
a port (17) arranged at the lower part of the vessel (5), to precipitate said contaminants from the vessel (5); and
a tank (19), to collect the purified liquid.

5. The device according to one of the preceding claims, further comprising a hydraulic turbine, arranged to be driven by the purified liquid and/or a steam turbine (23), arranged at a vapour outlet of the vessel (5) to receive the vapour to generate power.

6. The device according to one of the preceding claims, further comprising at least one photovoltaic unit (25) located at or in said vessel (5) such that heat generated by said photovoltaic unit can be utilized for heating the vessel (5) and/or the first and second liquid.

7. The device according to one of the preceding claims, further comprising a vacuum pump disposed between the vessel (5) and the condenser (11), generating a pressure in the vessel (5) that is lower than the pressure in the condenser (11) such that the vapour condenses at a temperature higher than the temperature within said vessel (5), wherein the heater (9) is coupled to the condenser (11) to utilize heat generated by the condenser (11).

8. A liquid purification method, comprising the steps of:
providing a vessel accommodating a first liquid, wherein the vessel is at least partially filled with said first liquid;
directly mixing a second liquid to be purified with the first liquid, said first liquid having a density higher than said second liquid, wherein said mixing comprises spraying of the second liquid into the first liquid;
heating the first and the second liquid, thereby causing the sprayed second liquid to flow upwards in the vessel and to evaporate to vapour; and
condensing the vapour, thereby generating a purified liquid,
wherein said first liquid comprises an ionic liquid, including ionic salts that are in liquid state at room temperature.

9. The method according to claim 8, wherein the ionic liquid comprises at least one of N-butyl-N-methyl-pyrrolidinium-bis(trifluoromethanesulfonyl)-imide, and 1-butyl-3-methyl-imidazolium-tetrafluoroborate.

10. The method according to claim 8 or 9, wherein said spraying generates a stream of liquid droplets.

11. The method according to one of the claims 8 to 10, further comprising the steps of:
pumping the second liquid to be mixed;
cleaning the vapour from contaminants by guiding the vapour past at least one louvre;
precipitating the contaminants from said vessel; and
collecting the purified liquid.

12. The method according to one of the claims 8 to 11, further comprising generating power by driving a hydraulic turbine by the purified liquid and/or by using the pressure of the vapour in a steam turbine.

13. The method according to one of the claims 8 to 12, further comprising heating the vessel and/or the first and the second liquid by heat generated by at least one photovoltaic unit located at or in said vessel.

14. The method according to one of the claims 8 to 13, further comprising generating a pressure in the vessel that is lower than the pressure in a condenser utilized for condensing said vapour such that the vapour condenses at a temperature higher than the temperature within said vessel, wherein the first and the second liquid are heated by heat generated by condensing said vapour.

15. A liquid purification system, comprising:
a cascade of devices according to one of the claims 1 to 7, comprising a first and at least one consecutive device, wherein the heater of the first device is driven by an external heat source, and wherein the heater of each consecutive device is coupled to the condenser of the preceding device, and wherein the condenser of the last device is air cooled or coupled to the heater of the last device.

## Patentansprüche

1. Flüssigkeitsreinigungsvorrichtung, die Folgendes umfasst:
einen Behälter (5), der eine erste Flüssigkeit aufnimmt, wobei der Behälter (5) zumindest teilweise mit der ersten Flüssigkeit gefüllt ist;
Mittel zum direkten Mischen einer zu reinigenden zweiten Flüssigkeit mit der ersten Flüssigkeit, wobei die erste Flüssigkeit eine höhere Dichte als die zweite Flüssigkeit hat, wobei das Mittel zum Mischen eine Spritz- oder Sprüheinheit (7) mit einer Vielzahl von Düsen (13) umfasst, die in dem Behälter (5) angeordnet sind, um die zweite Flüssigkeit in die erste Flüssigkeit zu spritzen oder zu sprühen;
eine Heizvorrichtung (9), die innerhalb des Behälters (5) angeordnet ist, um die erste und die zweite Flüssigkeit zu erhitzen, wodurch verursacht wird, dass die gespritzte oder gesprühte zweite Flüssigkeit in dem Behälter aufwärts fließt und zu Dampf verdampft; und
einen Kondensator (11), um den Dampf zu kondensieren, wodurch eine gereinigte Flüssigkeit erzeugt wird,
wobei die erste Flüssigkeit eine ionische Flüssigkeit umfasst, die ionische Salze aufweist, die bei Raumtemperatur im flüssigen Zustand sind.

2. Flüssigkeitsreinigungsvorrichtung nach Anspruch 1, wobei die ionische Flüssigkeit mindestens eines aus N-Butyl-N-Methyl-Pyrrolidinium-bis(Trifluoromethansulfonyl)-Imid und 1-Butyl-3-Methyl-Imidazolium-Tetrafluoroborat umfasst.

3. Vorrichtung nach Anspruch 1 oder 2, wobei die Düsen (13) der Spritz- oder Sprüheinheit (7) am Boden des Behälters (5) oder an der Seitenwand des Behälters (5) oder an beiden angeordnet sind und wobei die Düsen (13) der Spritz- oder Sprüheinheit (7) eingestellt sind und einen Durchmesser haben, um einen Strom von Flüssigkeitstropfen zu erzeugen.

4. Vorrichtung nach einem der vorhergehenden Ansprüche, die ferner Folgendes umfasst:
eine Pumpe, um die zweite Flüssigkeit zu dem Mittel zum Mischen zu pumpen;
einen Säuberungsabschnitt (15) in einem oberen Teil des Behälters (5), der mindestens ein Gitter (21) umfasst, das eingerichtet ist, den Dampf von Verunreinigungen zu säubern;
eine Öffnung (17), die in dem unteren Teil des Behälters (5) angeordnet ist, um die Verunreinigungen aus dem Behälter (5) abzuscheiden; und
einen Tank (19), um die gereinigte Flüssigkeit zu sammeln.

5. Vorrichtung nach einem der vorhergehenden Ansprüche, die ferner eine hydraulische Turbine, die angeordnet ist, um von der gereinigten Flüssigkeit angetrieben zu werden, und/oder eine Dampfturbine (23) umfasst, die an einem Dampfauslass des Behälters (5) angeordnet ist, um den Dampf zu empfangen, um Strom zu erzeugen.

6. Vorrichtung nach einem der vorhergehenden Ansprüche, die ferner mindestens eine photovoltaische Einheit (25) umfasst, die sich auf oder in dem Behälter (5) befindet, so dass die von der photovoltaischen Einheit erzeugte Wärme zum Erhitzen des Behälters (5) und/oder der ersten und der zweiten Flüssigkeit verwendet werden kann.

7. Vorrichtung nach einem der vorhergehenden Ansprüche, die ferner eine Vakuumpumpe umfasst, die zwischen dem Behälter (5) und dem Kondensator (11) angeordnet ist, welche einen Druck in dem Behälter (5) erzeugt, der niedriger als der Druck des Kondensators (11) ist, so dass der Dampf bei einer Temperatur kondensiert, die höher als die Temperatur innerhalb des Behälters (5) ist, wobei die Heizvorrichtung (9) an den Kondensator (11) gekoppelt ist, um eine von dem Kondensator (11) erzeugte Wärme zu verwenden.

8. Flüssigkeitsreinigungsverfahren, das die folgenden Schritte umfasst:
Bereitstellen eines Behälters, der eine erste Flüssigkeit aufnimmt, wobei der Behälter zumindest teilweise mit der ersten Flüssigkeit gefüllt ist;
direktes Mischen einer zu reinigenden zweiten Flüssigkeit mit der ersten Flüssigkeit,
wobei die erste Flüssigkeit eine höhere Dichte als die zweite Flüssigkeit hat, wobei das Mischen ein Spritzen oder Sprühen der zweiten Flüssigkeit in die erste Flüssigkeit umfasst;
Erhitzen der ersten und der zweiten Flüssigkeit, wodurch verursacht wird, dass die gespritzte oder gesprühte zweite Flüssigkeit in dem Behälter aufwärts fließt und zu Dampf verdampft; und
Kondensieren des Dampfes, wodurch eine gereinigte Flüssigkeit erzeugt wird,
wobei die erste Flüssigkeit eine ionische Flüssigkeit umfasst, die ionische Salze aufweist, die bei Raumtemperatur im flüssigen Zustand sind.

9. Verfahren nach Anspruch 8, wobei die ionische Flüssigkeit mindestens eines aus N-Butyl-N-Methyl-Pyrrolidinium-bis(Trifluoromethansulfonyl)-Imid und 1-Butyl-3-Methyl-Imidazolium-Tetrafluoroborat umfasst.

10. Verfahren nach Anspruch 8 oder 9, wobei das Spritzen oder Sprühen einen Strom von Flüssigkeitstropfen erzeugt.

11. Verfahren nach einem der Ansprüche 8 bis 10, das ferner die folgenden Schritte umfasst:
Pumpen der zweiten Flüssigkeit, die gemischt werden soll;
Säubern des Dampfes von Verunreinigungen durch Leiten des Dampfes an mindestens einem Gitter vorbei;
Abscheiden der Verunreinigungen aus dem Behälter; und
Sammeln der gereinigten Flüssigkeit.

12. Verfahren nach einem der Ansprüche 8 bis 11, das ferner ein Erzeugen von Strom durch Antreiben einer hydraulischen Turbine mit der gereinigten Flüssigkeit und/oder durch Verwenden des Drucks des Dampfes in einer Dampfturbine umfasst.

13. Verfahren nach einem der Ansprüche 8 bis 12, das ferner ein Erhitzen des Behälters und/oder der ersten und der zweiten Flüssigkeit mit Wärme umfasst, die von mindestens einer photovoltaischen Einheit erzeugt wird, die sich auf oder in dem Behälter befindet.

14. Verfahren nach einem der Ansprüche 8 bis 13, das ferner ein Erzeugen eines Drucks in dem Behälter umfasst, der niedriger als der Druck in einem Kondensator ist, der zum Kondensieren des Dampfes verwendet wird, so dass der Dampf bei einer Temperatur kondensiert, die höher als die Temperatur innerhalb des Behälters ist, wobei die erste und die zweite Flüssigkeit mit Wärme erhitzt werden, die durch Kondensieren des Dampfes erzeugt wird.

15. Flüssigkeitsreinigungssystem, das Folgendes umfasst:
eine Kaskade von Vorrichtungen gemäß einem der Ansprüche 1 bis 7, umfassend eine erste und mindestens eine nachfolgende Vorrichtung, wobei die Heizvorrichtung der ersten Vorrichtung von einer externen Wärmequelle angetrieben ist und wobei die Heizvorrichtung von jeder nachfolgenden Vorrichtung an den Kondensator der vorhergehenden Vorrichtung gekoppelt ist und wobei der Kondensator der letzten Vorrichtung luftgekühlt ist oder an die Heizvorrichtung der letzten Vorrichtung gekoppelt ist.

## Revendications

1. Dispositif de purification de liquide, comprenant :
une cuve (5) contenant un premier liquide, la cuve (5) étant au moins partiellement remplie avec ledit premier liquide ;
des moyens pour mélanger directement un deuxième liquide à purifier avec le premier liquide, ledit premier liquide ayant une masse volumique plus élevée que ledit deuxième liquide, lesdits moyens pour mélanger comprenant une unité de pulvérisation (7) ayant une pluralité de buses (13) disposées dans la cuve (5), pour pulvériser le deuxième liquide dans le premier liquide ;
un chauffage (9) agencé dans la cuve (5), pour chauffer le premier et le deuxième liquide, de manière à amener le deuxième liquide pulvérisé à s'écouler vers le haut dans la cuve et à s'évaporer en vapeur ; et
un condenseur (11), pour condenser la vapeur, de manière à générer un liquide purifié, ledit premier liquide comprenant un liquide ionique, comprenant des sels ioniques qui sont à l'état liquide à température ambiante.

2. Dispositif de purification de liquide selon la revendication 1, le liquide ionique comprenant au moins l'un du N-butyl-N-méthyl-pyrrolidinium-bis(trifluorométhanesulfonyl)-imide, et du tétrafluoroborate de 1-butyl-3-méthyl-imidazolium.

3. Dispositif selon la revendication 1 ou 2, dans lequel les buses (13) de l'unité de pulvérisation (7) sont agencées dans le fond de la cuve (5) ou dans la paroi latérale de la cuve (5) ou dans les deux, et les buses (13) de l'unité de pulvérisation (7) étant ajustées et ayant un diamètre pour générer un flux de gouttelettes liquides.

4. Dispositif selon une des revendications précédentes, comprenant en outre :
une pompe, pour pomper le deuxième liquide vers lesdits moyens pour mélanger ;
une section d'épuration (15) au niveau d'une partie supérieure de la cuve (5) comprenant au moins une fente (21), configurée pour épurer la vapeur des contaminants ;
un orifice (17) agencé au niveau de la partie inférieure de la cuve (5), pour précipiter lesdits contaminants depuis la cuve (5) ; et
un réservoir (19), pour collecter le liquide purifié.

5. Dispositif selon une des revendications précédentes, comprenant en outre une turbine hydraulique, configurée pour être entraînée par le liquide purifié et/ou une turbine à vapeur (23), agencée au niveau d'une sortie de vapeur de la cuve (5) pour recevoir la vapeur pour générer de l'électricité.

6. Dispositif selon une des revendications précédentes, comprenant en outre au moins une unité photovoltaïque (25) située au niveau de ou dans ladite cuve (5) de sorte que la chaleur générée par ladite unité photovoltaïque puisse être utilisée pour chauffer la cuve (5) et/ou le premier et le deuxième liquide.

7. Dispositif selon une des revendications précédentes, comprenant en outre une pompe à vide disposée entre la cuve (5) et le condenseur (11), générant une pression dans la cuve (5) qui est inférieure à la pression dans le condenseur (11) de sorte que la vapeur se condense à une température plus élevée que la température dans ladite cuve (5), le chauffage (9) étant couplé au condenseur (11) pour utiliser la chaleur générée par le condenseur (11).

8. Procédé de purification de liquide, comprenant les étapes de :
fourniture d'une cuve contenant un premier liquide, la cuve étant au moins partiellement remplie avec ledit premier liquide ;
le mélange directement d'un deuxième liquide à purifier avec le premier liquide, ledit premier liquide ayant une masse volumique supérieure audit deuxième liquide, ledit mélange comprenant la pulvérisation du deuxième liquide dans le premier liquide ;
le chauffage du premier et du deuxième liquide, de manière à amener le deuxième liquide pulvérisé à s'écouler vers le haut dans la cuve et à s'évaporer en vapeur ; et
la condensation de la vapeur, de manière à générer un liquide purifié,
ledit premier liquide comprenant un liquide ionique, comprenant des sels ioniques qui sont à l'état liquide à température ambiante.

9. Procédé selon la revendication 8, le liquide ionique comprenant au moins l'un du N-butyl-N-méthyl-pyrrolidinium-bis(trifluorométhanesulfonyl)-imide, et du tétrafluoroborate de 1-butyl-3-méthyl-imidazolium.

10. Procédé selon la revendication 8 ou 9, ladite pulvérisation générant un flux de gouttelettes liquides.

11. Procédé selon une des revendications 8 à 10, comprenant en outre les étapes de :
pompage du deuxième liquide à mélanger ;
épuration de la vapeur des contaminants par guidage de la vapeur devant au moins une fente ;
la précipitation des contaminants depuis ladite cuve ; et
la collecte du liquide purifié.

12. Procédé selon une des revendications 8 à 11, comprenant en outre la génération d'électricité par entraînement d'une turbine hydraulique par le liquide purifié et/ou en utilisant la pression de la vapeur dans une turbine à vapeur.

13. Procédé selon une des revendications 8 à 12, comprenant en outre le chauffage de la cuve et/ou du premier et du deuxième liquide par la chaleur générée par au moins une unité photovoltaïque située au niveau de ou dans ladite cuve.

14. Procédé selon une des revendications 8 à 13, comprenant en outre la génération d'une pression dans la cuve qui est inférieure à la pression dans un condenseur utilisé pour condenser ladite vapeur de sorte que la vapeur se condense à une température plus élevée que la température dans ladite cuve, le premier et le deuxième liquide étant chauffés par la chaleur générée par la condensation de ladite vapeur.

15. Système de purification de liquide, comprenant :
une cascade de dispositifs selon une des revendications 1 à 7, comprenant un premier dispositif et au moins un dispositif consécutif, le chauffage du premier dispositif étant alimenté par une source de chaleur externe, et le chauffage de chaque dispositif consécutif étant couplé au condenseur du dispositif précédent, et le condenseur du dernier dispositif étant refroidi par l'air ou couplé au chauffage du dernier dispositif.
